# EUROPEAN PATENT APPLICATION

(11) **EP 4 089 995 A1**
(43) Date of publication of application: **16.11.2022**
(21) Application number: 21382422.0
(22) Date of filing: 10.05.2021
(51) Int. Cl.: H04M 7/00, H04L 29/06

(54) **CALL MANAGEMENT INVOKED BY TELEPHONY API**

(71) Applicant: Vodafone Group Services Limited, Newbury RG14 2FN (GB); Vodafone España, S.A.U., 28042 Madrid (ES)
(72) Inventor: MUÑOZ, Verónica, Madrid (ES); MARTÍNEZ PEREA, Rogelio, Madrid (ES); ALBAZ, Ozge, Madrid (ES); DOMÍNGUEZ, Rafael, Madrid (ES)
(74) Representative: Boult Wade Tennant LLP

(57) **Abstract**

A method of managing call sessions invoked by API between a managed endpoint and a plurality of destination endpoints is provided. The method comprises sending (S122) a first session initiation protocol, SIP, INVITE to the managed endpoint, wherein the first SIP INVITE comprises a first call identifier and a media address of a first destination endpoint of the plurality of destination endpoints. The method further comprises sending (S180) a second SIP INVITE to the managed endpoint, wherein the second SIP INVITE comprises the first call identifier and a media address of a second destination endpoint of the plurality of destination endpoints, wherein the second destination endpoint is different from the first destination endpoint.

## Description

A method, server and computer software for managing sessions between a managed endpoint and a plurality of destination endpoints.

### Field of the invention

The application relates to using session initiation protocol, SIP, to manage sessions between endpoints. In particular the application relates to SIP flows to initiate and manage sessions by a call management server that is separate from the endpoints. The application further relates to a web-based Application Programming Interface, API, that may be used to invoke call management capabilities implemented using SIP.

### Background

Call management methods allow users to initiate a session between their managed device and a destination device. There are also methods to perform in-call functions, such as hold, transfer and the like. While a first session is ongoing, a user can initiate another session between their managed user device and a different destination device. However, these methods are fairly inflexible and provide limited management operations that can be accessed via call management applications over an API.

### Summary

A method of managing sessions between a managed endpoint and a plurality of destination endpoints is provided. The method comprises:
x) sending (S122) a first session initiation protocol, SIP, INVITE to the managed endpoint, wherein the first SIP INVITE comprises a first call identifier and a media address of a first destination endpoint of the plurality of destination endpoints; and
y) sending (S180) a second SIP INVITE to the managed endpoint, wherein the second SIP INVITE comprises the first call identifier and a media address of a second destination endpoint of the plurality of destination endpoints, wherein the second destination endpoint is different from the first destination endpoint.

The method may further comprise the following steps:
a) receiving (S110) an instruction to establish a session between the managed endpoint and the first destination endpoint;
b) sending (S112) a SIP INVITE to the managed endpoint, wherein the SIP INVITE comprises the first call identifier;
c) receiving (S114) an OK message from the managed endpoint, wherein the OK message comprises the first call identifier and a media address of the managed endpoint;
e) sending (S118) a SIP INVITE to the first destination endpoint, wherein the SIP INVITE comprises the media address of the managed endpoint;
f) receiving (S120) an OK message from the first destination endpoint, wherein the OK message comprises the media address of the first destination endpoint;
j) receiving (S162) an instruction to establish a session between the managed endpoint and the second destination endpoint;
q) sending (S176) a SIP INVITE to the second destination endpoint;
r) receiving (S178) an OK message from the second destination endpoint, wherein the OK message comprises the media address of the second destination endpoint;
t) sending (S184) an acknowledgement, ACK, to the to the second destination endpoint, wherein the ACK comprises the media address of the managed endpoint. Steps a) to e) and f) may be performed before step x). Steps j), n), q) and r) may be performed after step x) and before step y). Step t) may be performed after step y).

The method may comprise all of the steps described above or may only include a subset of these steps.

The SIP INVITE (S118) sent in step e) may further comprise a second call identifier.

The OK message (S120) received in step f) may further comprise the second call identifier.

The method may further comprise:
n) sending (S170) a SIP INVITE to the first destination endpoint, wherein the SIP INVITE comprises the second call identifier and an indication that the first destination endpoint has been placed on HOLD.

The SIP INVITE (S176) sent in step q) may comprise a third call identifier.

The OK message (S178) received in step r) may further comprise the third call identifier.

The ACK (S184) sent in step t) may further comprise the third call identifier.

A signalling channel associated with the first call identifier may be established at the managed endpoint in step b). The signalling channel may be used at step x) to establish (S130) a first media session between the managed endpoint and the first destination endpoint. The signalling channel may be used at step y) to establish (S190) a second media session between the managed endpoint and the second destination endpoint. In other words, the same signalling channel may be used to establish different media channels.

The media session may be a voice call or a video call.

The instruction at step a) and/or the instruction at step j) may be an IP-based request from a user application.

The instruction at step a) and/or the instruction at step j) may be a hypertext transfer protocol, HTTP, request from a user application.

The instruction at step a) and/or the instruction at step j) may be communicated using any type of protocol suitable for use in telephony APIs. For example, the instruction may be communicated using Computer-supported Telecommunications Applications, CSTA.

The method may further comprise one or both of the following steps:
d) sending (S116) an acknowledgement, ACK, to the managed endpoint, wherein the ACK comprises the first call identifier and a media address of an announcement service;
k) sending (S164) a SIP INVITE to the managed endpoint, wherein the SIP INVITE comprises the first call identifier and a media address of an announcement service.
Step d) may be performed before step x). Step k) may be performed after step x) and before step y).

The announcement service in step k) may be different to the announcement service in step d) (in other words, they may respectively be first and second announcement services). In this case, the media addresses of the announcement services would be different. Alternatively, the announcements may be provided by the same announcement service and the media address provided in these steps may therefore be the same.

The SIP INVITE sent to the first destination endpoint in step n) may further comprise a media address of a hold announcement service.

The hold announcement service may be different to the first and second announcement services described above.

The method may further comprise:
g) receiving (S124) an OK message from the managed endpoint, wherein the OK message comprises the first call identifier;
h) sending (S126) an ACK to the first destination endpoint;
i) sending (S128) an ACK to the managed endpoint, wherein the ACK comprises the first call identifier;
I) receiving (S166) an OK message from the managed endpoint, wherein the OK message comprises the first call identifier;
m) sending (S168) an ACK to the managed endpoint, wherein the ACK comprises the first call identifier;
o) receiving (S172) an OK message from the first destination endpoint;
p) sending (S174) an ACK to the first destination endpoint;
s) receiving (S182) an OK message from the managed endpoint, wherein the OK message comprises the first call identifier; and
u) sending (S186) an ACK to the managed endpoint, wherein the ACK comprises the first call identifier.
Steps g), I) and o) may be performed after step x) and before step y). Steps s) and u) may be performed after step y).

The OK message (S124) received in step g) may further comprise the media address of the managed endpoint.

The ACK (S126) sent in step h) may comprise the second call identifier.

The OK message (S166) received in step I) may further comprise the media address of the managed endpoint.

The ACK (S174) sent in step p) may comprise the second call identifier.

The OK message (S172) received in step o) may comprise the second call identifier. The OK message (S172) received in step o) may further comprise the media address of the first destination endpoint.

Media information that first destination endpoint sends in step o) (S172) may be the same as the media information sent in step f) (S120), in terms of IP and port for the media connection (SDPB). One difference between the media information sent in steps f) and o) may be that attribute "recvonly" is indicated in step o), whereas attribute "sendrecv" may be indicated in step f). This may be because the INVITE received in step n) may contain attribute "sendonly", which may be required to indicate that the call is on hold.

"recvonly" may indicate that a device is configured to receive media but not send media. "sendonly" may indicate that a device is configured to send media but not receive media. "sendrecv" may indicate that a device is configured to send and receive media.

The OK message (S182) received in step s) may further comprise the media address of the managed endpoint.

The first SIP INVITE at step x) may further comprise a signalling address of the first destination endpoint.

The second SIP INVITE at step y) may further comprise a signalling address of the second destination endpoint.

If the managed endpoint supports the SIP "from-change" feature then an updated signalling address may be provided for the SIP dialog, as well as the updated media address for the media session.

The media address of the first destination endpoint and/or the media address of the second destination endpoint may be provided using session description protocol, SDP. The media address of the first destination endpoint may be a SDP media address. The media address of the second destination endpoint may be a SDP media address.

The method may further comprise one or both of:
exchanging media between the managed endpoint and the first destination endpoint using the SDP media address provided (the media address of the first destination endpoint);
exchanging media between the managed endpoint and the second destination endpoint using the SDP media address provided (the media address of the second destination endpoint).

A media connected channel may be established between the managed endpoint and the first destination endpoint in response to receipt of the first SIP INVITE at step x).

A media connected channel may be established between the managed endpoint and the second destination endpoint in response to receipt of the second SIP INVITE at step y).

Media channels may be established as a direct result of the SIP invites that include the media addresses.

Media may be exchanged using a protocol suitable for transmitting media in real time.

Media may be exchanged using Real-time Transport Protocol, RTP, for example.

Each of the plurality of destination endpoints may have a different media address. Each of the plurality of destination endpoints may have a different signalling address. In other words, the RE-INVITE used at step y) to provide a media address of the second managed endpoint may be a media address for a totally different destination endpoint with a different signalling address as well as a different media address.

The managed endpoint may be a user equipment UE. In other words, the managed endpoint may be a 3G+ device.

A server configured to perform the methods described above is also provided.

Computer software comprising instructions that, when executed by a processor of a computer, cause the computer to perform the methods described above is also provided.

The messages in certain steps may be a response to other messages or may be triggered by other messages. For example:
the OK (S114) in step c) may be received in response to the INVITE (S112) sent in step b);
the ACK (S116) in step d) may be sent in response to the OK (S114) in step c);
the OK (S120) in step f) may be received in response to the INVITE (S118) sent in step e);
the ACK (S126) in step h) may be sent in response to the OK (S120) in step f);
the OK (S124) in step g) may be received in response to the INVITE (S122) sent in step x);
the ACK (S128) in step i) may be sent in response to the OK (S124) in step g);
the OK (S166) in step I) may be received in response to the INVITE (S164) sent in step k);
the ACK (S168) in step m) may be sent in response to the OK (S166) in step I);
the OK (S172) in step o) may be received in response to the INVITE (S170) sent in step n);
the ACK (S174) in step p) may be sent in response to the OK (S172) in step o);
the OK (S178) in step r) may be received in response to the INVITE (S176) sent in step q);
the ACK (S184) in step t) may be sent in response to the OK (S178) in step r);
the OK (S182) in step s) may be sent in response to the INVITE (S180) in step y);
the ACK (S186) in step u) may be sent in response to the OK (S182) in step s).

The steps may be performed in a specific order. Reordering of some steps may be permitted. For example:
step a) may be performed before step b); and/or
step b) may be performed before step c); and/or
step c) may be performed before step d); and/or
   step d) may be performed before step e); or
   step e) may be performed before step d); or
   step d) may be performed at the same time as step e); and/or
step e) may be performed before step f); and/or
step f) may be performed before step x); and/or
step x) may be performed before step g); and/or
step g) may be performed before step h); and/or
step h) may be performed before step i); and/or
step i) may be performed before step j); and/or
step j) may be performed before step k); and/or
step k) may be performed before step I); and/or
step I) may be performed before step m); and/or
   step m) may be performed before step n); or
   step n) may be performed before step m); or
   step m) may be performed at the same time as step n); and/or
step n) may be performed before step o); and/or
step o) may be performed before step p); and/or
   step p) may be performed before step q); or
   step q) may be performed before step p); or
   step p) may be performed at the same time as step q); and/or
step q) may be performed before step r); and/or
step r) may be performed before step y); and/or
step y) may be performed before step s); and/or
step s) may be performed before step t); and/or
   step t) may be performed before step u); or
   step u) may be performed before step t); or
   step t) may be performed at the same time as step u).

According to another aspect, a method of managing sessions between a managed endpoint and a plurality of destination endpoints is provided. The method comprises sending a first session initiation protocol, SIP, INVITE to the managed endpoint, wherein the first SIP INVITE comprises a first call identifier. The method further comprises sending a second SIP INVITE to the managed endpoint, wherein the second SIP invite comprises the same first call identifier.

The first SIP INVITE may be for establishing a connection with a first destination endpoint. The second SIP INVITE may be for establishing a connection with a second destination endpoint. In other words, the method may include two INVITEs to the managed endpoint having the same call identifier, where the purpose of the first INVITE is to establish a media connected channel with the first destination endpoint and the purpose of second INVITE is to establish a media connected channel with the second destination endpoint.

The second destination endpoint may be different from the first destination endpoint.

Media information for the connection with second destination endpoint may be different than media information for the connection with the first destination endpoint.

Advantageously, the signalling channel is the same because the same first call identifier is used. The media channel is different because the destination endpoints are different.

The proposed methods described above may improve the customer experience of users using 3rd party call control applications to manage calls. Using the proposed methods, it is possible to establish more than 2 calls via 3rd party call control applications managing calls of a legacy device.

### Brief description of the figures

Figure 1 illustrates signalling for initiating a session between a managed endpoint and a destination endpoint.
Figure 2 illustrates the signalling of a method for initiating a first session between a managed endpoint and a first destination endpoint and initiating a second session between the managed endpoint and a second destination endpoint.
Figure 3 illustrates the signalling of a new method for initiating a first session between a managed endpoint and a first destination endpoint and establish a second session between the managed endpoint and a second destination endpoint, in accordance with a specific example.
Figure 4 illustrates the signalling of a new method for initiating a first session between a managed endpoint and a first destination endpoint and establish a second session between the managed endpoint and a second destination endpoint, in accordance with a specific example.
Figure 5 illustrates a server for performing signalling according to a specific example.

### Detailed description of specific embodiments

A new method of call management is provided. The method includes receiving a request at a call management server (e.g. via an API) and SIP signalling performed by the call management server in response the request. The call management server exposes a telephony API so that developers can provide their own applications for managing sessions (such as calls). The server initiates and maintains sessions, in response to requests made over the API. As an example, the user may request the server to initiate a call to B. The server would then call A, wait for an answer, call B, wait for an answer and then connect A and B together.

It is an aim to provide an improved and simple method for managing sessions by a call management server (such as a "OneNet" (RTM) server). Session management may be achieved by means of a telephony API that third parties can utilise via externally developed applications. These applications may be used for managing voice calls, for example. The API may allow access to different services implemented by the call management server. This may allow third-parties to develop and maintain web applications tailored to their own requirements. This allows a more flexible system with more options for call management. In this way, users or groups of users may implement call management applications in a more flexible way. This may be achieved by providing a call management server that implements an API that exposes call management functions and is externally accessible by a third party call management application, which may be developed separately to meet users' requirements.

In some examples, the API may be:
- Web friendly; and
   ∘ Based on web-oriented languages and protocols.
- Developer-friendly.
   ∘ Simpler to understand and use by developers.

The call management server 100 exposes a telephony API, to allow an application, as a 3rd party call control, to manage sessions between endpoints.

In one example use case, a user requests, via a web application 200, to initiate a call to connect their phone, endpoint A 300 (mobile, softphone, mobile, etc.) with a destination, endpoint B 400. Once the call is established, also from the application, the user can request to put the call on hold, transfer it to a different destination (such as endpoint C 500), join it in a conference with another destination (such as endpoint C 500), and the like. Some call management servers accept call management commands over APIs. However, they do not use web-oriented languages, but other less user-friendly protocols. Existing methods for managing calls over APIs are limited by the limitations of existing APIs.

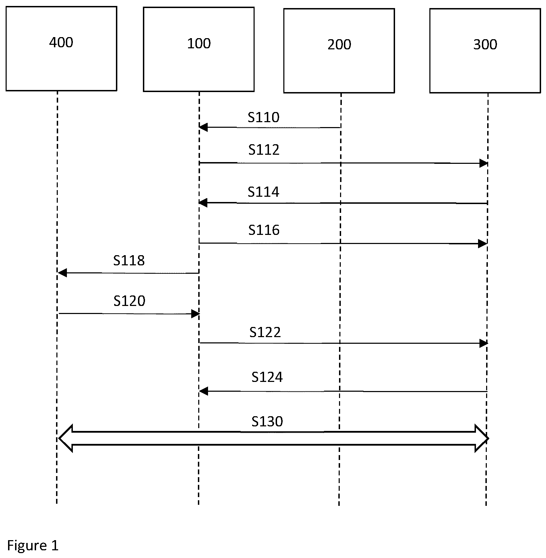

When a user requests from a call management app 200 to make a call towards endpoint B 400, the signalling flow carried on the network is illustrated in Figure 1 and described below:
- S110: "MAKE CALL TO B"
   ∘ User A sends a request to a call management server 100, from app 200, to request a call with destination endpoint B 400. The request may be a web-based request made using an API implemented by the server, for example.
- S112: "INVITE callid1"
   ∘ The call management server 100 sends a SIP INVITE having a first call identifier *"callid1"* to managed endpoint A 300 (towards the device where the user A will attend the call).
- S114: "200OK callid1/SDPA"
   ∘ When user A answers the call, managed endpoint A 300 sends an OK message to the call management server 100 that includes the media address of managed endpoint A 300, *"SDPA".*
- S116: "ACK callid1/SDP announcement"
   ∘ The call management server 100 sends an acknowledgement, ACK, including a media address of an announcement service, "SDP *announcement",* to managed endpoint A 300. User A is then connected with an announcement and hears a message, such as "Please hold while we connect your call".
- S118: "INVITE callid2/SDPA"
   ∘ The call management server 100 sends a SIP INVITE to destination endpoint B 400 (e.g. corresponding to a number specified in the request at S110), using a second call identifier *"callid2".* The SIP INVITE may include the media address of managed endpoint A 300, *"SDPA".* Alternatively, the media address of managed endpoint A 300 may be sent to destination endpoint B 400 in a subsequent message (not shown).
- S120: "200OK callid2/SDPB"
   ∘ When destination endpoint B 400 answers the call, an OK message including the media address of destination endpoint B 400, *"SDPB",* is sent to the call management server 100.
- S122: "RE-INVITE callid1/SDPB"
   ∘ The call management server 100 provides the media address of destination endpoint B 400 to managed endpoint A 300 by sending a RE-INVITE message to managed endpoint A 300, using the first call identifier.
- S124: "200OK callid1/SDPA"
   ∘ Managed endpoint A 300 responds to the RE-INVITE with an OK message. The OK message may include a media address for managed endpoint A 300. For simplicity, the media address of managed endpoint A 300 *"SDPA"* is shown as being the same every time. However, the media address may depend on the capabilities of the other endpoint (such as destination endpoint B 400) or the announcement service.
- S130: "A-B CONNECTED"
   ∘ Once managed endpoint A 300 and destination endpoint B 400 have exchanged media addresses (such as *"SDPA" and "SDPB" respectively*), a session is initiated and exchange of media can take place. In the case of a call, the call is connected and the users are able to exchange audio (and/or video).

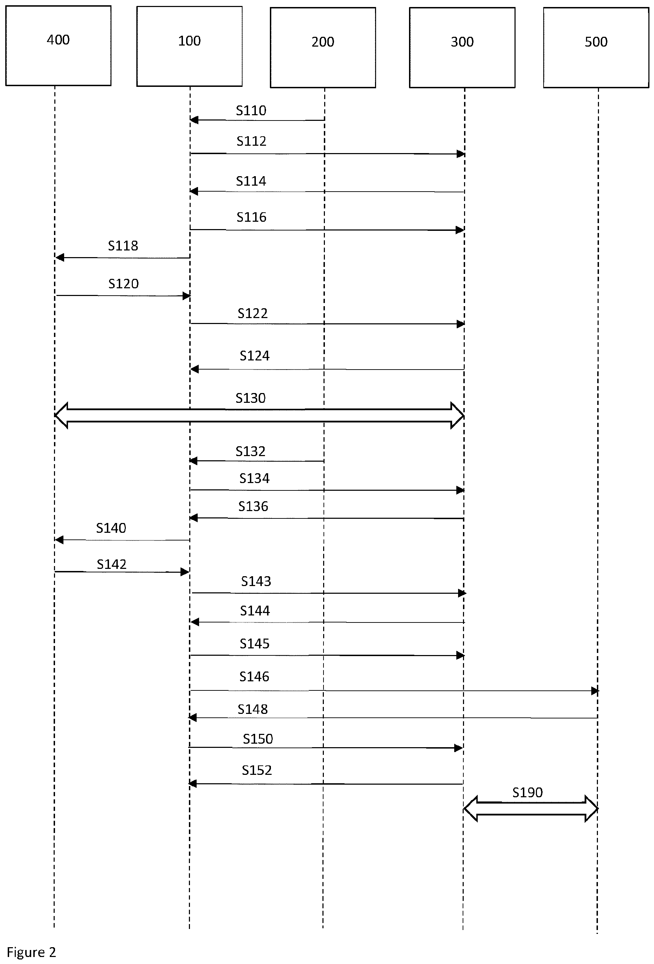

If, after having an established call, from the app, User A wants to call a new number C (maybe to transfer the call from B to C afterwards), the signalling is for this is shown in Figure 2, which builds upon the signalling described in Figure 1 by adding the following steps:
- S132: "MAKE CALL TO C"
   ∘ User A sends a new request to the call management server 100, from the app 200, to request a call with a different destination endpoint C 500. As before, the request may be a web-based request made using an API implemented by the server.
- S134: "INVITE callid3"
   ∘ The call management server 100 sends a new SIP INVITE having a new call identifier *"callid3"* to managed endpoint A 300 (towards the device where the user A will attend the call). This will cause the user's device to ring and the user will need to answer the call to be connected to C.
- S136: "RE-INVITE callid1 onHOLD"
   ∘ When user A answers the call at their device (managed endpoint A 300), the previous call with destination endpoint B 400 is put on HOLD automatically. This is done by the managed endpoint A 300 sending a RE-INVITE message with the first call identifier (such as *"callid1"*) and an indication that the call is being placed on HOLD to the call management server 100.
- S140: "RE-INVITE callid2 onHOLD"
   ∘ When the call management server 100 receives the "RE-INVITE callid1 onHOLD" message from managed endpoint A 300, the server sends a RE-INVITE message having the second call identifier "callid2" to destination endpoint B 400 to place the caller on HOLD.
- S142: "200OK callid2"
   ∘ Destination endpoint B 400 sends an OK message to the call management server 100 to indicate that the call between managed endpoint A 300 and destination endpoint B 400 is on HOLD.
- S143: "200OK callid1"
   ∘ The call management server 100 sends an OK message to managed endpoint A 300 to indicate that the call between managed endpoint A 300 and destination endpoint B 400 is on HOLD.
- S144: "200OK callid3/SDPA2"
   ∘ Once the call to destination endpoint B 400 has been successfully placed on HOLD, managed endpoint A 300 responds to the new INVITE for a call with destination endpoint C 500 with an OK message and provides a media address (such as *"SDPA2"*).
- S145: "ACK callid3/SDP announcement"
   ∘ The call management server 100 sends an ACK to managed endpoint A 300 in response to the 200 OK message at step S144 and provides a media address of an announcement service so that user A hears an announcement.
- S146: "INVITE callid4/SDPA2"
   ∘ The call management server 100 sends a new SIP INVITE to destination endpoint C 500.
- S148: "200OK callid4/SDPC"
   ∘ When destination endpoint C 500 answers the call, an OK message including the media address of destination endpoint C 500, *"SDPC",* is sent from destination endpoint C 500 to the call management server 100.
- S150: "RE-INVITE callid3/SDPC"
   ∘ The call management server 100 provides the media address of destination endpoint C 500 to managed endpoint A 300 by sending a RE-INVITE message to managed endpoint A 300, using the new call identifier *"callid3".*
- S152: "200OK callid3/SDPA2"
   ∘ Managed endpoint A 300 responds to the RE-INVITE with an OK message.
- S190: "A-C CONNECTED"
   ∘ Once managed endpoint A 300 and destination endpoint C 500 have exchanged media addresses ("*SDPA2" "SDPC"*), the session is initiated and exchange of media can take place. In the case of a call, the call is connected and the users are able to exchange audio (and/or video).

This way of managing calls in this scenario has drawbacks, including:
- The device where A is answering calls is required to receive a second call for the C call.
- If A's device is a mobile phone, at most only 2 calls will be able to be answered at the same time, one connected and the other on Hold.

A way to improve the user experience and increase the number of calls that can be attended simultaneously from a call management application is therefore proposed. The API will have a broad range of use cases. A specific example of the proposal is described, with reference to the use case described above.

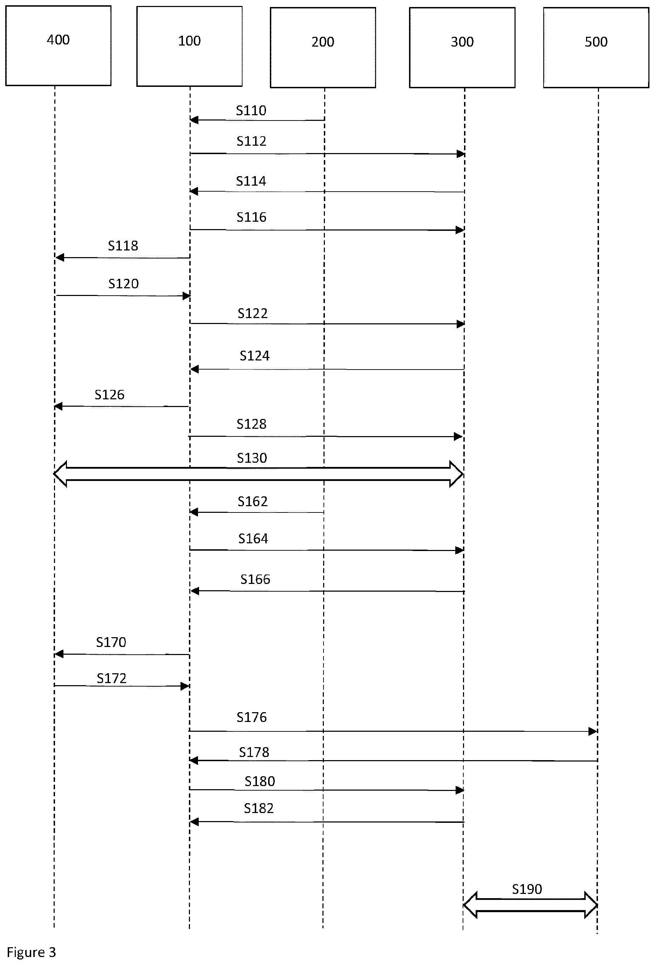

When the endpoint (also described as a "terminal") used to answer calls is a mobile phone, the signalling may be changed so that when a new call is requested from the app (and a call is already connected to A's device), the call management server 100 does not send an INVITE to A's device with a new call identifier. Instead, the call management server 100 uses the "channel" already established with A (to connect A with B) to instead connect A with C, using a RE-INVITE. The RE-INVITE sent to A has the same call identifier *"callid1"* as was used in the INVITE sent to A to establish the channel between A and B (in step S112). Example signalling is illustrated in Figure 3 and explained below:
- S110 - S130 are the same as described above.
- S162: "MAKE CALL TO C"
   ∘ User A sends a new request to the call management server 100, from the app 200, to request a call with a different destination endpoint C 500. As before, the request may be a web-based request made using an API implemented by the server. The request may include an indication that the existing "channel" should be re-used to establish the connection with destination endpoint C 500. In other words, the INVITE used to connect managed endpoint A 300 with destination endpoint C 500 should be a RE-INVITE having the same call identifier as the INVITE in S112.
- S164: "RE-INVITE callid1/SDP announcement"
   ∘ The call management server 100 sends a SIP RE-INVITE to endpoint A 300 (towards the device where the user A will attend the call). The RE-INVITE has the same call identifier as the call that is already established on managed endpoint A 300 *"callid1".* This RE-INVITE will therefore NOT cause the user's device (managed endpoint A 300) to ring and will NOT require the user to answer a call in order to be connected to destination endpoint C 500. The RE-INVITE may include a media address of an announcement service.
- S166: "200OK callid1/SDPA"
   ∘ The call management server 100 receives the "200OK callid1/SPDA" message from managed endpoint A 300, confirming that managed endpoint A 300 has redirected their media connection away from destination endpoint B 400. Instead, managed endpoint A 300 is connected to the announcement service "*SDP announcement".*
- S170: "RE-INVITE callid2 onHOLD"
   ∘ The call management server 100 places the previous call with destination endpoint B 400 on HOLD by sending a RE-INVITE message with the second call identifier *"callid2"* and an indication that the call is being placed on HOLD to destination endpoint B 400. This may happen once media to managed endpoint A 300 has been redirected by the RE-INVITE.
- S172: "200OK callid2"
   ∘ Destination endpoint B 400 sends an OK message to the call management server 100 to indicate that the call between managed endpoint A 300 and destination endpoint B 400 is on HOLD. This call scenario may appear the same to destination endpoint B 400 as the scenario described above.
- S176: "INVITE callid3"
   ∘ The call management server 100 sends a new SIP INVITE towards destination endpoint C 500.
- S178: "200OK callid3/SDPC"
   ∘ When destination endpoint C 500 answers the call, an OK message including the media address of destination endpoint C 500, "*SDPC*", is sent from destination endpoint C 500 to the call management server 100.
- S180: "RE-INVITE callid1/SDPC"
   ∘ The call management server 100 provides the media address of destination endpoint C 500 to managed endpoint A 300 by sending a RE-INVITE message to managed endpoint A 300, using the call identifier used in step S112 when initiating the call to B *"callid1".*
- S182: "200OK callid1/SDPA"
   ∘ Managed endpoint A 300 responds to the RE-INVITE in step S180 with an OK message. The OK message may include the media address of managed endpoint A 300, *"SDPA".*
- S190: "A-C CONNECTED"
   ∘ Once managed endpoint A 300 and destination endpoint C 500 have exchanged media addresses (*"SDPA" "SDPC"*)*,* the session is initiated and exchange of media can take place. In the case of a call, the call is connected and the users are able to exchange audio (and/or video).

As can be seen above, when user C answers the call, managed endpoint A 300 is connected with destination endpoint C 500 using a SIP RE-INVITE, using the media address provided by destination endpoint C 500. Destination endpoint B may also be subsequently connected with a SIP RE-INVITE (not shown).

### Announcement service

As described above, a media address of an announcement service may be provided to the managed endpoint A 300 in the following steps:
- S116: "ACK callid1/SDP announcement"
   ∘ The call management server 100 sends an acknowledgement, ACK, including a media address of an announcement service, "SDP *announcement",* to managed endpoint A 300. User A is then connected with an announcement and hears a message, such as "Please hold while we connect your call".
- S164: "RE-INVITE callid1/SDP announcement"
   ∘ The call management server 100 sends a SIP RE-INVITE to managed endpoint A 300 (towards the device where the user A will attend the call). The RE-INVITE has the same call identifier as the call that is already established on managed endpoint A *"callid1".* This will therefore NOT cause the user's device to ring and will NOT require the user to answer a call in order to be connected to destination endpoint C 500. The RE-INVITE may include a media address of an announcement service.
- S166: "200OK callid1/SDPA"
   ∘ The call management server 100 receives the "200OK callid1/SPDA" message from managed endpoint A 300, confirming that managed endpoint A 300 has redirected their media connection away from destination endpoint B 400. Instead, managed endpoint A 300 is connected to the announcement service *"SDP announcement".*

The destination endpoints may also be provided with a media address of an announcement service. The RE-INVITE sent in S170 may further include a media address of a HOLD announcement service:
- S170: "RE-INVITE callid2/SDP announcement onHOLD"

To facilitate the onHOLD announcement service, endpoint B may further provide a media address in the 200 OK response sent in step S172:
- S172: "200OK callid2/SDPB"

The announcement played in step S170 may be different than the announcement played in step S116 and the announcement played in step S164. The media address of the Media Resource Function MRF may be different in each case (more than one MRF may be provided in the network).

### Acknowledgements

When receiving an instruction to make a second call, instead of sending a new call (INVITE with a different call identifier) to managed endpoint A 300, which requires the user of A to take manual actions to answer the call, the proposed methods use the channel already established. The method may include the following steps:
- Place the first destination endpoint on hold (step S170)
- Connect the managed endpoint with MRF, hearing the announcement that second destination is being alerted (step S164)
- Second destination endpoint receives a new call (step S176)

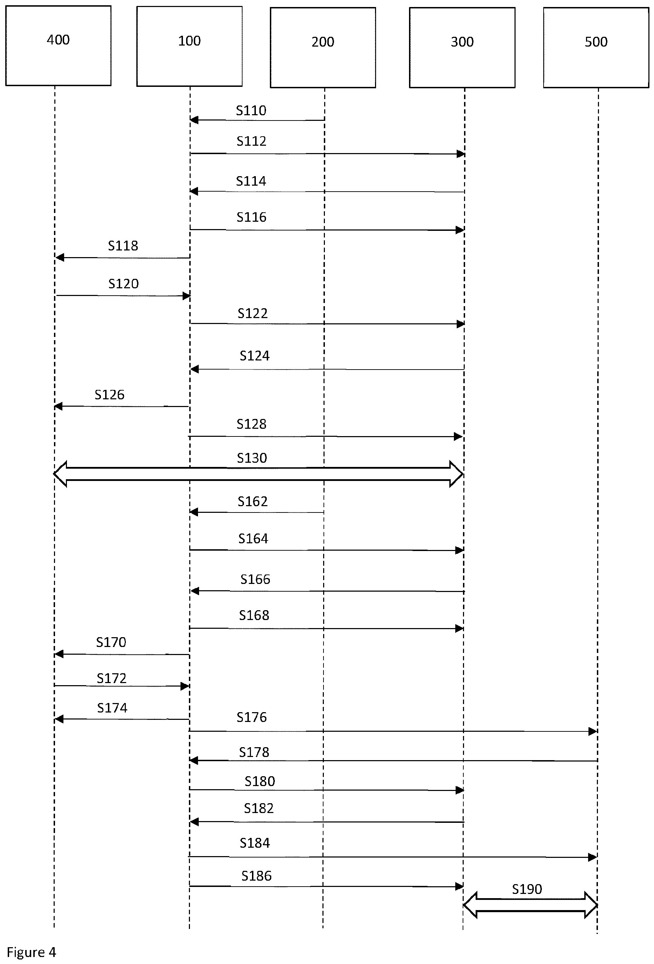

Unlike the INVITE sent in to C step S146, the INVITE sent to C in step S176 may not include a media address of endpoint A. The SIP INVITE sent to the second destination in step S176 does not contain a media address for the managed endpoint (for example *"SDPA"*) because managed endpoint is connected in that moment with an announcement service. When the service receives the answer to the call from second destination for the third call identifier, a RE-INVITE is sent to managed endpoint A 300 with media information of second destination (and announcement stops). This RE-INVITE is used to change media information and it is answered automatically by the device of managed endpoint A 300, without any manual action, as the call identifier is the same (first call identifier). This answer contains the managed endpoint media information where second destination endpoint 500 must send the media packets. Therefore, the media address of the managed endpoint A 300 (*"SDPA"*) is sent in the ACK (acknowledge of the 200 OK sent to the call management server 100 in step S178) to the second destination endpoint C 500. From that moment, media packets may be exchanged between managed endpoint and second destination endpoint in step S190. This is illustrated in Figure 4, alongside some other ACK messages that were previously omitted for conciseness. These other ACK messages may not contain SDP (media) information. The signalling is explained below:
- S110 - S124 as described above
- S126: "ACK callid2"
- S128: "ACK callid1"
- S162 - S166 as described above
- S168: "ACK callid1"
- S170 - 172 as described above
- S174: "ACK callid2"
- S176 - S182 as described above
- S184: "ACK callid3/SDPA"
   ∘ The media address of managed endpoint A 300 is provided to the call management server 100 in step S182 and may be provided to destination endpoint C 500 in step S184, which is an acknowledgement of the OK sent in step S178.
- S186: "ACK callid1"
- S190 as described above

The media address of managed endpoint A 300 is provided to the call management server 100 in the 200 OK message in step S114 and in the 200 OK message in step S124. Every time there is a new media offer sent to managed endpoint A 300 (such as a new RE-INVITE using the same call identifier with a new destination media address), a 200 OK/SDP may be sent in response, even when that SDP (the media address of managed endpoint A 300) does not change. In other words, the destination media address changes between the announcement service, destination endpoint B 400 and destination endpoint C 500, but the media address of managed endpoint A 300 may remain unchanged. Nevertheless, managed endpoint A 300 may send the unchanged media address in the 200 OK message in step S124 to obey protocol. Likewise, the 200 OK messages sent in step S166 and step S182 also include the media address of managed endpoint A 300, which may remain unchanged.

The media address of the managed endpoint (in terms of IP and port of the media channel) may remain unchanged, unless the call is transferred. However, other attributes may change depending on the capabilities of the other endpoint. For example, codecs selected can change. The media information that managed endpoint A 300 sends in the OK of step S124 is the answer to the INVITE received in step S122, which includes the media information of destination endpoint B 400. Some attributes (such as codec, and the like) in the media information sent in step S124 can therefore be different than the media information sent in step S114 (which is the OK sent in response to the initial INVITE, before any media information of the destination endpoint was provided).

The 200 OK of step S166 is the answer to the INVITE received in step S164. Therefore, the media information of managed endpoint A 300 may be the same IP address and port of the media information provided in steps S114 and S124. However, some attribute values may be different. For example, the codec indicated may be one selected from the codecs offered in the INVITE of step S164.

The media address of managed endpoint A 300 could be sent to destination endpoint B 400 in the ACK at S126. This may provide destination endpoint B with the SDP media address, SDPA, if the INVITE at S118 does not contain any media information.

### Hardware

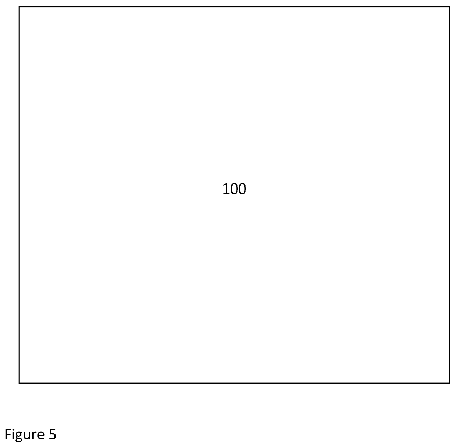

Figure 5 illustrates a call management server 100 according to a specific example. The call management server 100 is configured to perform the call management methods described in this application. The call management server 100 may comprise a network interface. The call management server 100 may be configured to send and receive SIP messages via the network interface. The call management server 100 may comprise an Application Programming Interface. The call management server 100 may be configured to receive call management requests from one or more third-party applications via the API.

### Session vs. Dialog

When setting up the session with endpoint C, the call management server 100 sends a RE-INVITE with the same call identifier as the INVITE that was sent to set up the earlier session with B. In other words, the RE-INVITE is part of the same dialog as the original INVITE. In this way, the same "channel" is used for the media (at least from A's perspective). As a result, endpoint A does not need to answer a new call when the call management server 100 connects A to C. The channel already set up at endpoint A for the session with endpoint B is used for new calls (e.g. to endpoint C). This allows the user to manage (via the application) multiple calls in a simple manner.

In previous call management methods, a new session (with a new call identifier) may be established for each call to a separate destination endpoint (e.g. B 400 and C 500). Where Endpoint A is a mobile telephone, call management operations may be limited to no more than 2 calls. This is because some mobile telephones are only able to maintain two simultaneous calls (one active and one on HOLD). In contrast, the proposed call management method proposes to use one active call at managed endpoint A to connect to different destination endpoints (e.g. B 400 and C 500). As described above, this may be achieved through the use of RE-INVITE messages having the same call identifier as the INVITE used to set up the active call.

From the perspective of managed endpoint A 300, there will be a maximum of 1 call at all times. At the same time, the proposed call management method improves the user experience because the user does not need to answer a second call. This is true not only when managed endpoint A 300 is a mobile phone, but in all cases. The signalling change can be applied to all scenarios to improve user experience.

As described above, the proposed method uses a modified signaling method. As a result, when a web-based app 200 sends a request to a call platform 100, to set up a 2^{nd} or subsequent call from a caller User Equipment, UE 300 to a 2^{nd} and subsequent UEs 500, the call platform uses a call identifier (e.g. *"callid1"*) that has already been established for a call from the caller UE 300 to a 1^{st} UE 400. This is achieved by means of a RE-INVITE. In other words, once a call identifier has been established between the caller UE 300 and a 1^{st} UE 400, the same call identifier is used for 2^{nd} and potentially subsequent connections.

The proposed signaling method may provide enhanced efficiency by avoiding a need for a managed endpoint (e.g. a caller UE) to be sent more than one SIP INVITE for new separate sessions (e.g. having different call identifiers), when the managed endpoint is being connected to more than one other destination endpoint.

The proposed signaling method may enable a managed endpoint (e.g. a UE such as a mobile telephone) to use the web-based app to set up more than two simultaneous calls (i.e., with more than two other destination endpoints such as UEs). This may be achieved through the use of the same call identifier (from A's perspective) for two different sessions:
1. the session between A and B; and
2. the session between A and C.

As described above, SIP messages are exchanged between the call management server 100 and the endpoints 300, 400 and 500, rather than directly between endpoints. This is so that the call management server 100 can perform management functions (such as transfer calls, place calls on hold, initiate conference calls, and the like).

The call management server 100 maintains dialogs with multiple endpoints. Therefore, each dialog has a different identifier. The dialog with managed endpoint A may be identified as "callid1", as shown in the examples illustrated in the Figures. SIP is being used to set up a session between endpoints A and B. However, the identifier used in the dialog between the call management server 100 and destination endpoint B 400 ("*callid2"* in the examples) may be different to the identifier used in the dialog between the call management server 100 and managed endpoint A 300 (*"callid1"* in the examples). This is because the identifier may be used by the call management server 100 to differentiate between the dialog with managed endpoint A 300 and the dialog with destination endpoint B 400.

In previous call management methods, as described above, a new dialog between the call management server 100 and the managed endpoint A 300 may be initiated. This would require A to answer a new call. In contrast, the proposed method only requires one dialog between the call management server 100 and the managed endpoint A 300 (*"callid1"*).

Throughout the signaling process, a number of SIP invites are sent from the call management server 100 to managed endpoint A 300 (for example, steps S112, S122, S134, S150, S164 and S180, illustrated in Figures 1 to 4). The INVITE at step S112 initiates a new dialog with managed device A. This dialog is used to establish a session between A and B by providing the media address of destination endpoint B 400 in the INVITE in step S122. In previous methods, such as the one illustrated in Figure 2, an INVITE is sent to managed endpoint A at step S134 to establish a session with destination endpoint C. Importantly, a different identifier to the one in steps S112 and S122 is used and a new dialog is initiated. Managed endpoint A 300 therefore has to answer a new call to connect to the session. In contrast, the claimed invention uses the identifier of the existing dialog (from steps S112 and S122) in the INVITE messages at steps S164 and S180. At step S180, the media address of destination endpoint C is provided to managed endpoint A 300 to establish a session with destination endpoint C 500. This new session is established using the existing dialog and therefore without managed endpoint A 300 needing to answer a new call.

To understand the differences between the proposed method and previous methods, the INVITES sent in steps S134, S150, S164 and S180 are particularly important. In step S134, a new dialog is initiated with managed endpoint A 300 and the user of A needs to answer a new call. In contrast, the proposed method uses the identifier for the existing dialog in S164. Steps S150 and S180 provide managed device A 300 with the media address to establish a session with C *"SDPC"* (this may be in the form of an SDP payload). The INVITE sent in S150 in the previous method uses the identifier of the new dialog. In contrast, the INVITE sent as step S180 in the proposed method uses the same call identifier as the INVITES in steps S112, S122 and S164. No new dialog with A is required in the proposed method and A does not need to answer a separate call to connect with C.

As described above, the call management method may apply in 3rd party call control scenarios where an application 200 can manage sessions for a managed subscriber 300. The application 200 can be running in a PC, a mobile, a web browser and can control the calls for a specific number (corresponding to managed endpoint A) that attends the calls in a terminal. The terminal where the number receives the call may be a smartphone (no VOLTE), a VOLTE smartphone, an analogic device, a SIP phone, and the like. Therefore, the application 200 can control all calls for the number (A), by establishing a communication with the API service. Moreover, the application 200 can manage the established calls in the terminal (A) (hold, resume, transfer, conference, divert the calls, etc.) and also the application 200 can initiate new calls.

### The SIP "To" and "From" fields

For new calls initiated by the application (such as to establish a call between A and B), the SIP signalling is originated by the call management server 100 (which may be an Application Server), unlike when calls are made directly with a terminal of A, where the signalling is initiated by the terminal. As discussed above, the method performed by the call management server 100 is described with reference to the signalling flow illustrated in Figure 1:
- S112: The A terminal receives an incoming SIP INVITE (callid1) without any media information, where "From" and "To" is an address of A. In this case, "From" is not an address of B, because B is not initiating the call. Rather, it is the user A who is initiating the call using application 200.
- S114: When terminal A answers the call (sending the "200 OK/SDP", with its media information for the connection - *"SDPA*'), it is connected with an announcement.
- S116: Terminal A receives an ACK/SDP with the media information of the Media Resource Function, MRF - *"SDP announcement".*
- S118: Once A is connected with the announcement, the call management server 100 sends a second SIP INVITE to B (callid2), with the media information to be connected with A. In This case, From=A, To=B.
- S120: B answers the call and sends a 200OK
- S122: The call management server 100 connects A with B, sending to A in a RE-INVITE including the media information to be connected with B.

Once A has answered a first call, there is an active call at managed endpoint A 300. If the user A wants to make a new call to C then, in previous methods (e.g. illustrated in Figure 2), the call management server 100 sends a new SIP INVITE to A (with identifier *"callid3"* and where From/To=A, as explained above) and A has to answer another call. This is because, from the network point of view, this is a new call. After that, an INVITE is sent do C (callid4).

If A already has an established call with B (initiated or not by the application) and requests a new call from the application it would be preferable that the A terminal does not need to answer a new call. Therefore, proposed methods seek to use the signalling channel with the A terminal that is already established. In this way, A should not have to answer a new call, but the call management server 100 should be able to connect a media channel between A and C using the already "established" call between A and B. In other words, using the same callid of the already established call in the A terminal.

In previous methods, such as the one illustrated in Figure 2:
- Managed endpoint A 300 ("the A terminal") has 2 different calls connected, where From/To=A.
- The application 200 manages 2 different calls via call management server 100:
   ∘ Call 1 with From=A and To=B, and
   ∘ Call 2 with From=A and To=C.

With the changes proposed:
- Managed endpoint A 300 has 1 call connected, where From/To=A
- The application 200 manages 2 different calls via call management server 100:
   ∘ Call 1 with From=A and To=B, and
   ∘ Call 2 with From=A and To=C.

Moreover, in the proposed method, managed endpoint A 300 can be connected with more than 2 destination endpoints using the same unique SIP dialog for all of them and different media channels. In contrast, in previous methods, if managed endpoint A 300 is a smartphone, it can be connected with 2 destinations only, as the smartphone cannot manage more than 2 calls at the same time.

In some SIP signalling scenarios, the "from" field in the INVITE that initiates the dialog is constant throughout the dialog. However, there are some scenarios in which the "from" field can change throughout the dialog. In order for this to happen, both the parties to the dialog (e.g. terminal A and the call management server 100) should support the SIP "from-change" feature.

For a new call initiated by the application, where managed endpoint A 300 does not already have a call established, in the RE-INVITE of step S122, the call management server 100 provides modified media information (such as *"SDPB*")*.* In this case, if managed endpoint A supports the "from-change" feature, the call management server 100 may also modify the address (or identity) of the destination in the RE-INVITE sent in step S122. The destination address in the "To" field will be modified to B so that managed endpoint A 300 has 1 call connected, where From=A and To=B.

For a second call initiated by the application, where A (managed number) already has an established call, in the re-INVITE in step S180, the call management server 100 modifies the media information (such as *"SDPC"*). If managed endpoint A supports the "from-change" feature, the call management server 100 may also modify the address of the destination to C in the RE-INVITE sent in step S180. Following this modification:
- Managed endpoint A 300 has 1 call connected, where From=A and To=C
- The application 200 manages 2 different calls via call management server 100:
   ∘ Call 1 with From=A and To=B, and
   ∘ Call 2 with From=A and To=C.

### Alternatives

Whilst the above examples describe that a request is sent to a call management server, which is responsible for handling the SIP signalling, the SIP signalling methods described in this application may also apply when the first session between the managed endpoint and the first destination endpoint is not initiated by the application. For example, the first session between the managed endpoint and the first destination endpoint may be initiated by the terminal directly (or the "managed endpoint", "user device" and the like). Moreover, the first session may be a session that is initiated elsewhere and received by the managed endpoint.

If a call is initiated directly by an endpoint to another endpoint then a SIP dialog may be established between those endpoints, without a call management server acting as an intermediary. In this case, SIP messages having a common Call-ID may be exchanged between the endpoints. In order to exchange SIP messages between two endpoints, network elements may be required between the two endpoints (such as a Proxy, back-to-back user agent B2BUA, etc.). These elements may be responsible for routing the call to the destination and applying call control.

The list of messages and steps in the method is not comprehensive and additional steps or messages may be exchanged between the method steps described. For example, a SIP client may send a "100 Trying" and/or a "180 Ringing" message after receiving an "INVITE" but before sending a "200 OK". This may indicate that the request is being processed or that a user device is ringing.

The term "endpoint" has been used to refer to signalling and media destinations. These may alternatively be referred to as "terminals". They may also be described as devices or "subscribers" that may have an "address", "number" or "identifier".

An "address" could include a SIP signalling address (e.g. the "from" field in a SIP message). Alternatively, an "address" could be a "media address". A "media address" refers to an address to which session media is sent, once a session has been established (e.g. an SDP media address of an endpoint).

In the SIP protocol, the identifier that relates all the messages of a unique SIP dialogue may be indicated in the "Call-ID" header. Sometimes, that header may alternatively be called "call-id" or "Call-Id", for example. In this application, Call-IDs such as "callid1", "callid2" etc. are used to illustrate separate SIP dialogues.

Whilst the above specific examples refer to "calls", the proposed signalling method may be used to establish different types of session between endpoints. These may include:
- voice calls;
- non-voice calls;
- video calls;
- video and voice calls;
- messaging;
- gaming;
- and the like.

Whilst the server 100 is referred to as a "call management server", the server may be used to manage any of the different session types described above. The server could therefore be referred to as a "management server" or "session management server".

The managed endpoint (Device A 300) may be a UE in a 3GPP+ network. As described above, it may be a mobile telephone, such as a smartphone. However, this is not essential. SIP signalling is used to establish the connection but the actual endpoint device A 300 could be a legacy device connected to the "plain old telephone service", POTS, for example. Likewise, the destination endpoints (B 400 and C 500) may be UEs such as smartphones. However, they could also be legacy devices on the POTS.

The "managed" endpoint is so called because the user is able to initiate and manage calls to that endpoint via application 200. The user of the application 200 may also be the user of the managed endpoint 300. In other words, the user may use the application 200 to control calls to their own phone. In this way, the application 200 may be running on the UE (e.g. a as a smartphone app).

It is not essential that application 200 be running on the same device as managed endpoint 300. The user may manage their calls through a desktop app. In this case, the managed endpoint could be their mobile phone, a desk phone or a softphone running on a computer. The term "managed endpoint" indicates that this is the device that the user is managing through the API.

B and C in the examples above are described as "destination endpoints". This is because these are the endpoints to which calls are made. The terms "managed" and "destination" are used to differentiate how the endpoints are being used in the call scenarios described. However, this should not be taken to mean there is anything fundamentally different about the endpoints. The user of endpoint B may also have a call management application and endpoint B may be described as the "managed endpoint" when describing call scenarios managed by B. Likewise, they could initiate a call to endpoint A and endpoint A would be a "destination endpoint" in that scenario.

## Claims

1. A method of managing sessions between a managed endpoint and a plurality of destination endpoints, the method comprising:
x) sending (S122) a first session initiation protocol, SIP, INVITE to the managed endpoint, wherein the first SIP INVITE comprises a first call identifier and a media address of a first destination endpoint of the plurality of destination endpoints; and
y) sending (S180) a second SIP INVITE to the managed endpoint, wherein the second SIP INVITE comprises the first call identifier and a media address of a second destination endpoint of the plurality of destination endpoints, wherein the second destination endpoint is different from the first destination endpoint.

2. The method of claim 1, wherein the method further comprises:
a) receiving (S110) an instruction to establish a session between the managed endpoint and the first destination endpoint;
b) sending (S112) a SIP INVITE to the managed endpoint, wherein the SIP INVITE comprises the first call identifier;
c) receiving (S114) an OK message from the managed endpoint, wherein the OK message comprises the first call identifier and a media address of the managed endpoint;
e) sending (S118) a SIP INVITE to the first destination endpoint, wherein the SIP INVITE comprises a second call identifier and the media address of the managed endpoint;
f) receiving (S120) an OK message from the first destination endpoint, wherein the OK message comprises the second call identifier and the media address of the first destination endpoint;
wherein steps a) to e) and f) are performed before step x), wherein the method further comprises:
j) receiving (S162) an instruction to establish a session between the managed endpoint and the second destination endpoint;
n) sending (S170) a SIP INVITE to the first destination endpoint, wherein the SIP INVITE comprises the second call identifier and an indication that the first destination endpoint has been placed on HOLD;
q) sending (S176) a SIP INVITE to the second destination endpoint, wherein the SIP INVITE comprises a third call identifier;
r) receiving (S178) an OK message from the second destination endpoint, wherein the OK message comprises the third call identifier and the media address of the second destination endpoint;
wherein steps j), n), q) and r) are performed after step x) and before step y), and wherein the method further comprises:
t) sending (S184) an acknowledgement, ACK, to the to the second destination endpoint, wherein the ACK comprises the third call identifier and the media address of the managed endpoint;
wherein step t) is performed after step y).

3. The method of claim 2, wherein a signalling channel associated with the first call identifier is established at the managed endpoint in step b) and:
wherein the signalling channel is used at step x) to establish (S130) a first media session between the managed endpoint and the first destination endpoint; and/or
wherein the signalling channel is used at step y) to establish (S190) a second media session between the managed endpoint and the second destination endpoint.

4. The method of claim 3, wherein the media session is a voice call or video call.

5. The method of any preceding claim, wherein the SIP INVITE sent to the first destination endpoint in step n) further comprises a media address of a hold announcement service.

6. The method of any of claims 2 to 5, wherein the method further comprises:
d) sending (S116) an acknowledgement, ACK, to the managed endpoint, wherein the ACK comprises the first call identifier and a media address of an announcement service;
wherein step d) is performed before step x) and wherein the method further comprises:
k) sending (S164) a SIP INVITE to the managed endpoint, wherein the SIP INVITE comprises the first call identifier and a media address of an announcement service;
wherein step k) is performed after step x) and before step y).

7. The method of claim 6, wherein the method further comprises:
g) receiving (S124) an OK message from the managed endpoint, wherein the OK message comprises the first call identifier and the media address of the managed endpoint;
h) sending (S126) an ACK to the first destination endpoint, wherein the ACK comprises the second call identifier;
i) sending (S128) an ACK to the managed endpoint, wherein the ACK comprises the first call identifier;
I) receiving (S166) an OK message from the managed endpoint, wherein the OK message comprises the first call identifier and the media address of the managed endpoint;
m) sending (S168) an ACK to the managed endpoint, wherein the ACK comprises the first call identifier;
o) receiving (S172) an OK message from the first destination endpoint, wherein the OK message comprises the second call identifier;
p) sending (S174) an ACK to the first destination endpoint, wherein the ACK comprises the second call identifier;
wherein steps g), I) and o) are performed after step x) and before step y) and wherein the method further comprises:
s) receiving (S182) an OK message from the managed endpoint, wherein the OK message comprises the first call identifier and the media address of the managed endpoint; and
u) sending (S186) an ACK to the managed endpoint, wherein the ACK comprises the first call identifier,
wherein steps s) and u) are performed after step y).

8. The method of any preceding claim, wherein:
the first SIP INVITE at step x) further comprises a signalling address of the first destination endpoint; and/or
the second SIP INVITE at step y) further comprises a signalling address of the second destination endpoint.

9. The method of any preceding claim, wherein the media address of the first destination endpoint and/or the media address of the second destination endpoint is provided using session description protocol, SDP.

10. The method of claim 9, further comprising:
exchanging media between the managed endpoint and the first destination endpoint using the SDP media address provided; and/or
exchanging media between the managed endpoint and the second destination endpoint using the SDP media address provided.

11. The method of any preceding claim, wherein:
a media connected channel is established between the managed endpoint and the first destination endpoint in response to receipt of the first SIP INVITE; and/or
a media connected channel is established between the managed endpoint and the second destination endpoint in response to receipt of the second SIP INVITE.

12. The method of any preceding claim, wherein each of the plurality of destination endpoints has a different media address and signalling address.

13. The method of any preceding claim, wherein the managed endpoint is a user equipment UE.

14. A server configured to perform the method of any preceding claim.

15. Computer software comprising instructions that, when executed by a processor of a computer, cause the computer to perform the method of any of claims 1 to 13.
